# DEMANDE DE BREVET EUROPEEN

(11) **EP 4 213 322 A1**
(43) Date de publication de la demande: **19.07.2023**
(21) Numéro de dépôt: 22214227.5
(22) Date de dépôt: 16.12.2022
(51) Int. Cl.: H02G 1/14, H01R 4/72, H02G 15/18

(54) **ENSEMBLE DE CONNEXION ENTRE DEUX CÂBLES ÉLECTRIQUES**

(30) Priorité: 12.01.2022 FR 2200209
(71) Demandeur: Nexans, 92400 Courbevoie (FR)
(72) Inventeur: CARPENTIER, Ludovic, 08200 Floing (FR); DURMOIS, Lionel, 08300 Lucquy (FR); DE BUYST, Jo, 9340 Lede (BE); VAN BOXSTAEL, Eddy, 92400 Courbevoie (FR)
(74) Mandataire: Ipsilon

(57) **Abrégé**

Cet ensemble de connexion entre deux câbles électriques (14) comporte un connecteur (10) adapté à assembler mécaniquement les deux câbles électriques (14). Il comporte en outre un manchon de protection (12) en matériau semiconducteur thermorétractable disposé sur le connecteur (10) et recouvrant au moins partiellement le connecteur (10), le manchon de protection (12) étant préformé de façon à épouser la forme du connecteur (10).

## Description

La présente invention se rapporte à un ensemble de connexion entre deux câbles électriques. L'invention se rapporte également à une jonction de câble électrique comportant un tel ensemble de connexion, ainsi qu'à un câble électrique équipé d'une telle jonction.

L'invention appartient au domaine des jonctions de câbles électriques. Elle trouve en particulier à s'appliquer aux câbles électriques à basse, moyenne ou haute tension.

Dans une jonction entre deux câbles électriques, un connecteur est couramment utilisé pour assembler mécaniquement les deux câbles. Le connecteur est généralement fixé sur les câbles par des vis ou éléments de fixation équivalents. D'autres parties de la jonction sont ensuite installées au-dessus de ce connecteur afin de réaliser la connexion électrique entre les deux câbles. Il est donc utile de protéger le connecteur.

Les éléments de protection des connecteurs utilisés actuellement sont par exemple des plaques de caoutchouc semi-conducteur, des rubans de cuivre ou d'aluminium. Ce type d'élément de protection est relativement fragile et est susceptible de se déchirer facilement, en particulier lorsque la jonction comporte un manchon rétractable, qui une fois installé exerce une pression importante sur le connecteur. Les angles vifs des vis ou autres éléments de fixation du connecteur peuvent alors rompre l'élément de protection et endommager d'autres parties de la jonction.

La présente invention a pour but de remédier aux inconvénients précités de l'art antérieur.

Dans ce but, la présente invention propose un ensemble de connexion entre deux câbles électriques, l'ensemble comportant un connecteur adapté à assembler mécaniquement les deux câbles électriques, l'ensemble étant remarquable en ce qu'il comporte en outre un manchon de protection en matériau semi-conducteur thermorétractable disposé sur le connecteur et recouvrant au moins partiellement le connecteur, le manchon de protection étant préformé de façon à épouser la forme du connecteur.

Ainsi, on obtient de façon simple et économique une bonne protection de la jonction contre les agressions du connecteur mécanique.

Dans un mode particulier de réalisation où le connecteur est de forme sensiblement cylindrique, le manchon de protection est de forme sensiblement cylindrique et est ouvert sur toute sa longueur de façon à pouvoir être emboîté sur le connecteur.

Cela permet une installation rapide, facile et sans outil particulier.

Selon une caractéristique particulière possible, le manchon de protection présente une épaisseur comprise entre 0,1 mm et 5 mm.

Cette épaisseur offre à la fois une protection satisfaisante et une bonne élasticité pour le clipsage du manchon de protection sur le connecteur.

Dans le même but que celui indiqué plus haut, la présente invention propose également une jonction de câble électrique, remarquable en ce qu'elle comporte un ensemble de connexion tel que succinctement décrit ci-dessus.

Dans le même but que celui indiqué plus haut, la présente invention propose également un câble électrique comportant au moins deux segments de câble, remarquable en ce que deux des au moins deux segments de câble sont reliés entre eux par une jonction de câble électrique telle que décrite succinctement ci-dessus.

Dans un mode particulier de réalisation, le câble est un câble à basse tension ou à moyenne tension.

Les caractéristiques particulières et les avantages de la jonction et du câble étant similaires à ceux de l'ensemble de connexion, ils ne sont pas répétés ici.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une vue schématique d'un ensemble de connexion conforme à la présente invention, dans un mode particulier de réalisation et dans un état avant son assemblage.
[Fig. 2] est une vue schématique d'un ensemble de connexion conforme à la présente invention, dans un mode particulier de réalisation et dans un état en cours d'assemblage.

### Description de mode(s) de réalisation

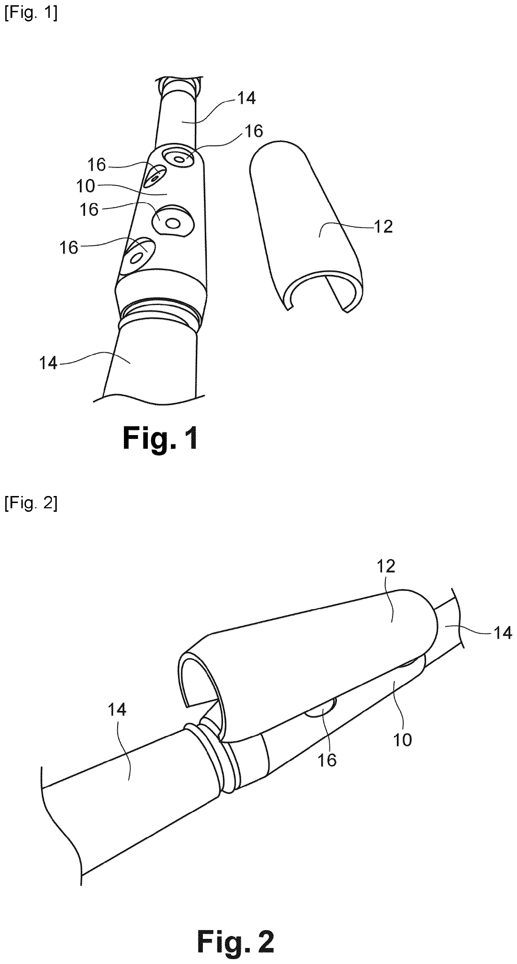

Comme le montre la figure 1, dans un mode particulier de réalisation, un ensemble de connexion conforme à la présente invention contribue à la réalisation d'une jonction entre deux segments d'un même câble électrique comportant au moins deux segments de câble, ou entre deux câbles électriques distincts, les segments et les câbles étant ici désignés communément par la référence 14. Les segments de câble ou câbles 14 peuvent être à basse tension ou à moyenne tension, voire à haute tension.

Cet ensemble de connexion comporte un connecteur 10 adapté à assembler mécaniquement les deux câbles 14.

De façon connue en soi, le connecteur 10 est fixé par une pluralité d'éléments de fixation 16, tels que des vis ou équivalent, sur les extrémités des câbles 14 à assembler.

Conformément à la présente invention, l'ensemble de connexion comporte en outre un manchon de protection 12, illustré sur la figure 1 à côté du connecteur 10, avant assemblage du connecteur 10 et du manchon de protection 12.

Le manchon de protection 12 est réalisé dans un matériau semi-conducteur thermorétractable. A titre d'exemple non limitatif, le manchon de protection 12 peut être réalisé dans un polyéthylène semi-conducteur tel qu'une polyoléfine réticulée. Avantageusement, tout autre matériau présentant une résistivité volumique suffisamment faible au regard des normes en vigueur peut être utilisé. Avantageusement, la résistivité volumique du matériau choisi est inférieure à 20 Ω.cm.

Après assemblage, le manchon de protection 12 est disposé sur le connecteur 10 et le recouvre au moins partiellement.

Conformément à la présente invention, le manchon de protection 12 est préformé de façon à épouser la forme du connecteur 10.

On tire profit de la propriété de rétractation à chaud du manchon de protection 12 pour réaliser facilement ce préformage.

Dans le mode particulier de réalisation illustré, le connecteur 10 est de forme sensiblement cylindrique, comme le sont les câbles 14 à assembler. Par conséquent, le manchon de protection 12 présente la même forme sensiblement cylindrique.

En outre, avantageusement, pour pouvoir être emboîté sur le connecteur 10 comme le montre la figure 2, le manchon de protection 12 est ouvert sur toute sa longueur, l'ouverture étant prévue suffisamment large pour permettre cette opération d'emboîtement. Le matériau semi-conducteur thermorétractable du manchon de protection 12 présente une élasticité suffisante pour permettre la déformation sans rupture du manchon de protection 12 lors de l'emboîtement. Divers types de matériaux semi-conducteurs connus en soi utilisés dans le domaine de l'électricité présentent une telle propriété.

Avantageusement, l'épaisseur du manchon de protection 12 est comprise entre 0,1 mm et 5 mm.

Une fois l'emboîtement du manchon de protection 12 sur le connecteur 10 réalisé, on peut mettre en place de façon connue en soi les autres parties de la jonction entre les deux segments de câble ou les deux câbles 14. A titre d'exemple non limitatif, ces autres parties de la jonction peuvent comporter la mise en place d'une électrode, la pose de mastic électriquement conducteur, d'un manchon rétractable à froid ou à chaud, qui pourra être installé de façon connue en soi au moyen d'un ou plusieurs tubes support amovibles, la mise en place d'une chaussette ou tresse métallique, puis d'une couverture sur la jonction.

## Revendications

1. Ensemble de connexion entre deux câbles électriques (14), ledit ensemble comportant un connecteur (10) adapté à assembler mécaniquement lesdits deux câbles électriques (14), ledit ensemble étant **caractérisé en ce qu'**il comporte en outre un manchon de protection (12) en matériau semi-conducteur thermorétractable disposé sur ledit connecteur (10) et recouvrant au moins partiellement ledit connecteur (10), ledit manchon de protection (12) étant préformé de façon à épouser la forme dudit connecteur (10).

2. Ensemble de connexion selon la revendication 1, dans lequel ledit connecteur (10) est de forme sensiblement cylindrique, **caractérisé en ce que** ledit manchon de protection (12) est de forme sensiblement cylindrique et est ouvert sur toute sa longueur de façon à pouvoir être emboîté sur ledit connecteur (10).

3. Ensemble de connexion selon la revendication 1 ou 2, **caractérisé en ce que** ledit manchon de protection (12) présente une épaisseur comprise entre 0,1 mm et 5 mm.

4. Jonction de câble électrique, **caractérisée en ce qu'**elle comporte un ensemble de connexion selon la revendication 1, 2 ou 3.

5. Câble électrique (14) comportant au moins deux segments de câble, **caractérisé en ce que** deux desdits au moins deux segments de câble sont reliés entre eux par une jonction de câble électrique selon la revendication 4.

6. Câble (14) selon la revendication 5, **caractérisé en ce que** c'est un câble à basse tension ou à moyenne tension.
